# EUROPÄISCHE PATENTANMELDUNG

(11) **EP 1 008 284 A2**
(43) Veröffentlichungstag der Anmeldung: **14.06.2000**
(21) Anmeldenummer: 99124372.6
(22) Anmeldetag: 07.12.1999
(51) Int. Cl.: A01B 59/06

(54) **Teleskopierbarer Geräteanbau eines Kraftfahrzeugs**

(30) Priorität: 11.12.1998 DE 19857167
(71) Anmelder: DEERE & COMPANY, Moline, Illinois 61265-8098 (US)
(72) Erfinder: Bernhardt, Gerd, Prof. Dr. Ing. habil., 01728 Hänichen (DE); Fedotow, Sergej, 01069 Dresden (DE); Wünsche, Mario, 01454 Radeberg (DE)
(74) Vertreter: Lau-Loskill, Philipp, Dipl.-Phys.

(57) **Zusammenfassung**

Es wird ein Kraftfahrzeug für industrielle und/oder landwirtschaftliche Arbeiten, insbesondere für einen Ackerschlepper, mit einer einen Dreipunkt-Geräteanbau (24) enthaltenden Anbauschnittstelle beschrieben.

Um das Einsatzspektrum des Fahrzeugs und die Funktionalität der Anbauschnittstelle zu erweitern und um neue Einsatzbereiche für das Kraftfahrzeug zu erschließen, wird vorgeschlagen, daß an dem Fahrzeugchassis (14) ein teleskopierbarer und in vertikaler Richtung schwenkbarer Teleskoparm (16) angelenkt ist. An dem freien ausfahrbaren Ende des Teleskoparms (16) ist ein Träger (22) angeordnet, der die Anbauschnittstelle mit dem Dreipunkt-Geräteanbau (24) trägt. Es ist eine Verrieglungsvorrichtung (38, 40) vorgesehen, durch die der Träger (22) gegenüber dem Fahrzeugchassis (14) fixierbar ist, wenn sich der Teleskoparm (16) in einer Arbeitsstellung befindet.

## Beschreibung

Die Erfindung betrifft ein Kraftfahrzeug für industrielle und/oder landwirtschaftliche Arbeiten, insbesondere für einen Ackerschlepper, mit einer einen Dreipunkt-Geräteanbau enthaltenden Anbauschnittstelle an der Fahrzeugrückseite oder an der Fahrzeugvorderseite. Es ist ein an dem Fahrzeugchassis angelenkter teleskopierbarer und um eine horizontale Achse in vertikaler Richtung schwenkbaren Teleskoparm vorgesehen, an dessen freiem ausfahrbaren Ende ein Träger angeordnet ist, der die Anbauschnittstelle mit dem Dreipunkt-Geräteanbau trägt.

Insbesondere Ackerschlepper, aber auch andere industrielle oder landwirtschaftlich verwendete Arbeitsfahrzeuge dienen neben der Ausführung von Transportarbeiten vor allem als Arbeitsmaschine, durch die sich beispielsweise Arbeiten auf dem Feld ausführen lassen. Zu diesem Zweck läßt sich an das Arbeitsfahrzeug ein für die durchzuführende Arbeit geeignetes Arbeitsgerät anbauen. Der Traktor ist somit im Gegensatz zu Einzweckmaschinen ein offenes System, das erst durch die Kopplung mit einem Arbeitsgerät zu einer arbeitsfähigen Maschine wird.

Da das Kraftfahrzeug für die Durchführung unterschiedlicher Arbeiten mit unterschiedlichen Arbeitsgeräten koppelbar sein soll, kommt der Anbauschnittstelle zwischen Kraftfahrzeug und Arbeitsgerät eine besondere Bedeutung zu. Unter einer Anbauschnittstelle sind alle Einrichtungen zu verstehen, die erforderlich sind, um Arbeitsgeräte an das Kraftfahrzeug anzukoppeln und gegebenenfalls mit Antriebsenergie zu versorgen.

Eine übliche Anbauschnittstelle, mit der heute die meisten Ackerschlepper und ähnliche landwirtschaftliche Kraftfahrzeuge versehen sind, enthält einen sogenannten Dreipunkt-Geräteanbau, wie er beispielsweise durch ISO 730 oder DIN 9674 definiert ist. Dieser weist zwei über eine Hubwelle miteinander verbundene Hubarme auf, an denen je ein zugehöriger hydraulischer Kraftheberzylinder angreift. Jeder Hubarm ist über eine Hubstange oder eine Hubspindel mit einem zugehörigen Unterlenker verbunden, der einen unteren Kopplungspunkt trägt. Desweiteren enthält der Dreipunkt-Geräteanbau einen am Schlepperrumpf angelenkten Oberlenker mit einem dritten mittigen, oberen Kopplungspunkt.

Der Dreipunkt-Geräteanbau ermöglicht es, Arbeitsgeräte auf einfache Weise rasch an den Ackerschlepper zu montieren. Hierbei wird der Ackerschlepper an das auf dem Boden abgestellte Arbeitsgerät herangefahren. Die Koppelungspunkte werden an entsprechende Aufnahmen des Anbaugeräts gekoppelt, so daß das Arbeitsfahrzeug und das Arbeitsgerät eine funktionsfähige Prozeßeinheit bilden. Gegebenenfalls wird eine Zapfwelle des Arbeitsfahrzeugs an eine Eingangswelle des Arbeitsgeräts angeschlossen. Desweiteren können zwischen dem Arbeitsfahrzeug und dem Arbeitsgerät elektrische und hydraulische Verbindungen zur Kraft- und Signalübertragung hergestellt werden. Durch Betätigung der Kraftheberzylinder läßt sich das Arbeitsgerät anheben und in seiner Höhenlage innerhalb bestimmter Grenzen einstellen, um das Arbeitsgerät zwischen einer Transportstellung und der gewünschten Arbeitsposition zu bewegen. Das Arbeitsgerät benötigt dabei in vielen Fällen kein eigenes Fahrgestell.

Trotz des vielseitig anwendbaren Dreipunkt-Geräteanbaus ist das Einsatzspektrum für das Kraftfahrzeug noch begrenzt.

Durch die DE-A-33 33 865 ist ein landwirtschaftlicher Schlepper mit einer heckseitigen und einer frontseitigen Hebevorrichtung bekannt geworden. Die frontseitige Hebevorrichtung enthält einen nach unten gerichteten Profilträger, der sich mittels eines hydraulischen Steuerzylinders um einen horizontalen Querbolzen gegenüber einer fahrzeugfesten Traggabel verschwenken läßt. An der Vorderseite des Profilträgers ist das Außenrohr eines Teleskoprohres angeschweißt. In dem Außenrohr ist ein Innenrohr geführt und läßt sich durch einen hydraulischer Steuerzylinder relativ zum Außenrohr verschieben.

Das Innenrohr trägt an seinem unteren Ende einen halbkreisförmig gekrümmten Bügel, an dem eine mittige obere Befestigungszunge und zwei seitliche untere Befestigungszungen angebracht sind. Die Befestigungszungen bilden eine Dreipunkt-Befestigung für Maschinen und Geräte, wie beispielsweise Bodenfräsen. Die bekannte frontseitige Hebevorrichtung ist nicht für Geräte, beispielsweise für Pflüge, geeignet, durch die hohe Zugkräfte in den Schlepper eingeleitet werden.

Die der Erfindung zugrunde liegende Aufgabe wird darin gesehen, ein gattungsgemäßes Kraftfahrzeug derart auszubilden, daß sein Einsatzspektrum erweitert wird. Insbesondere soll die Funktionalität der Anbauschnittstelle erweitert werden, um neue Einsatzbereiche für das Kraftfahrzeug zu erschließen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Kraftfahrzeug für industrielle und/oder landwirtschaftliche Arbeiten enthält eine Anbauschnittstelle an der Fahrzeugrückseite oder an der Fahrzeugvorderseite mit einem Dreipunkt-Geräteanbau, der vorzugsweise gemäß ISO 730 oder DIN 9674 ausgebildet sein kann. An dem Fahrzeugchassis, beispielsweise am Fahrzeugrumpf, einem Fahrzeugrahmen oder dem Fahrzeugaufbau, ist ein teleskopierbarer und um eine horizontale Achse in vertikaler Richtung schwenkbarer Teleskoparm angelenkt, an dessen freiem Ende ein Träger angeordnet ist, der die Anbauschnittstelle mit dem Dreipunkt-Geräteanbau trägt. Desweiteren ist eine Verriegelungsvorrichtung vorgesehen, durch die der Träger gegenüber dem Fahrzeugchassis wahlweise fixierbar ist, wenn sich der Teleskoparm beispielsweise in einer eingefahrenen und abgesenkten Arbeitsstellung befindet.

Durch die erfindungsgemäße teleskopierbare Anbauschnittstelle werden für das Kraftfahrzeug, insbesondere den Ackerschlepper, neue Einsatzbereiche erschlossen. Sie ermöglicht einerseits die Durchführung aller Arbeiten, die mit einem herkömmlichen Dreipunkt-Geräteanbau erledigt werden konnten. Andererseits ist eine große Ladehöhe an der Fahrzeugrückseite bzw. an der Fahrzeugvorderseite ständig verfügbar. Das erfindungsgemäße Kraftfahrzeug ermöglicht das Bewegen von Arbeitsgeräten mit erweiterten Freiheitsgraden und erweitertem Hubbereich. Es läßt sich einerseits als konventionellen Schlepper mit konventioneller Anbauschnittstelle und andererseits als funktionsfähiger Lader einsetzen. Ein bevorzugter Anwendungsfall ist darin zu sehen, daß ein normaler Arbeitsbetrieb (Pflügen) erfolgen kann und daß sich das Arbeitsgerät (Pflug) so weit ausheben läßt, daß seine Ablage auf einem Anhänger oder einer erhöhten Ablage ohne zusätzliche Hilfsmittel möglich ist. Durch das einfache, rasch auszuführende Verladen kann ein rascher Wechsel zwischen räumlich getrennten Arbeitseinsatzorten erfolgen, indem nach einem Arbeitseinsatz das Arbeitsgerät auf einen Anhänger verladen, der Anhänger an das Kraftfahrzeug angehängt und zu einem neuen Einsatzort bei hoher Fahrgeschwindigkeit gefahren wird. Es ist ein Anheben von Geräten bis beispielsweise in Höhe der Kabinenoberkante möglich, so daß die Geräte hoch angehoben und beispielsweise auf Regalen oder auf Anhängern abgelegt werden können, ohne sie zuvor vom Dreipunkt-Geräteanbau zu lösen.

Ein weiterer Vorteil der teleskopierbaren Anbauschnittstelle liegt darin, daß das Koppeln von Anbaugeräten und beispielsweise auch das Graben mit der Erdschaufel durch horizontale Bewegungen des Teleskoparms realisiert werden können, ohne daß der Traktor bewegt werden muß.

Durch die erfindungsgemäße Verriegelungsvorrichtung läßt sich der Träger, wenn er sich in einer Arbeitsstellung befindet, mit dem Fahrzeugchassis starr verbinden und verriegeln. Bei Transportarbeiten oder bei Arbeiten mit Dreipunktanbau werden damit die auftretenden Lasten von dem Träger aus direkt über die Verriegelungseinrichtung in das Fahrzeugchassis eingeleitet, so daß der Teleskoparm entlastet ist.

Die Anbauschnittstelle enthält vorzugsweise neben dem Dreipunkt-Geräteanbau weitere am Träger befestigbare Anbauvorrichtungen und/oder Anhängevorrichtungen. Es lassen sich so die Funktionen der heute üblichen Einpunktanhänge-Vorrichtungen, wie Zughaken, starres Zugpendel, Anhängekupplung und dergleichen nachbilden. Bei allen Ausbildungen können Zugösen eines anzuhängenden Gerätes vom Boden aufgenommen und hydraulisch in Betriebsposition gebracht werden.

Vorzugsweise ist der Teleskoparm hinsichtlich der Quererstreckung des Fahrzeugs mittig, hinter der Fahrerplattform, insbesondere hinter der Kabine, und vor der Hinterachse angebaut, wobei sich eine teleskopierbare Heckschnittstelle ergibt. Das Kraftfahrzeug kann dabei in vorteilhafter Weise als Mittel- oder Frontsitzschlepper ausgebildet sein.

Gemäß einer bevorzugten Ausgestaltung der erfindungsgemäßen Geräteschnittstelle enthält der Teleskoparm im wesentlichen ein äußeres am Fahrzeugchassis schwenkbar angelenktes Schwenkteil und mindestens einen ausfahrbaren Einschub, der der Längenausdehnung dient. Am freien Ende des Einschubs ist der Träger befestigt, der einen Dreipunkt-Geräteanbau trägt.

Einer besonders einfachen Ausbildung der Erfindung zur Folge, enthält der Teleskoparm zwei konzentrisch ineinanderschiebbare Schüsse. Diese können Rechteckprofile aufweisen, die ein vergleichsweise hohes Widerstandsmoment bieten und eine einfache Konstruktion der Gleitführungen und der Stützpunkte für Hubeinrichtungen ermöglichen. Für besondere Anwendungsfälle kann auch die Verwendung eines Teleskoparms mit wenigstens drei konzentrisch ineinanderschiebbaren Schüssen vorteilhaft sein.

Die Schwenk- und Ausfahrbewegung des Teleskoparms und gegebenenfalls die Relativbewegung des Trägers gegenüber dem Teleskoparm erfolgt gemäß bevorzugter Weiterbildungen der Erfindung durch Druckmittelkolben-Zylindereinheiten, zweckmäßigerweise durch doppelwirkende Hydraulikzylinder. Diese können durch das Hydrauliksystem des Kraftfahrzeugs mit Hydraulikdruckflüssigkeit versorgt werden. Insbesondere kann zum Aus- und Einfahren der Schüsse wenigstens ein Ausschubzylinder zwischen dem Schwenkteil und einem ausfahrbaren Einschub bzw. jeweils zwischen den Schüssen des Teleskoparms vorgesehen sein. Vorzugsweise greifen zwei wirkungsmäßig parallel angeordnete Hubzylinder einerseits an dem Fahrzeugchassis und andererseits an dem Teleskoparm an, um das Anbaugerät vertikal zu bewegen.

Um den Träger in eine gewünschte definierte Ausrichtung zu bringen oder in einer definierten Lage halten zu können, ist es von Vorteil den Träger mit dem freien Ende des Teleskoparms, beispielsweise mit dem freien Ende eines ausfahrbaren Einschubs, gelenkig zu verbinden. Zwischen dem Teleskoparm bzw. dem Fahrzeugaufbau einerseits und dem beweglichen Träger andererseits ist wenigstens ein doppelwirkender Schwenkzylinder angeordnet, durch den sich der Träger verschwenken und ausrichten läßt.

Bei einer Reihe von Arbeiten soll das Arbeitsgerät eine gewünschte Ausrichtung zum Boden beibehalten, auch wenn der Teleskoparm bewegt wird. Hierfür ist es von besonderem Vorteil wenn das Schwenksystem so ausgebildet ist, daß die Kopplungsebene unabhängig von der Neigung des Teleskoparms senkrecht oder in einer anderen gewünschten Lage gehalten wird. Eine bevorzugte Weiterbildung der Erfindung sieht hierfür eine Niveausteuereinrichtung vor, die den wenigstens einen Schwenkzylinder derart ansteuert, daß das Gerät unabhängig von der Schwenklage des Teleskoparms in einer gewünschten Ausrichtung relativ zum Boden gehalten wird. Zur Ermittlung eines Istwertsignals für die Niveausteuerung kann die Ausrichtung der gewünschten Lage des Geräts durch einen geeigneten Sensor überwacht werden.

Es hat sich auch als vorteilhaft herausgestellt, einen an den Dreipunkt-Geräteanbau befestigbaren Adapter vorzusehen, der der Aufnahme von speziellen Geräten dient, deren Anbauschnittstelle beispielsweise nicht durch die oben genannte Norm für einen Dreipunkt-Geräteanbau definiert ist. Durch diese Kombination kann ein konventioneller Frontlader ersetzt werden. Diese Ausbildung ermöglicht beispielsweise die Durchführung aller Arbeiten, die bisher mit einem Frontlader erledigt wurden, sofern die Frontladerwerkzeuge (Erdschaufel, Staplergabel usw.) mittels Spezialadapter an den Dreipunkt-Geräteanbau befestigt werden.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Perspektivansicht eines erfindungsgemäßen Kraftfahrzeugs mit teleskopierbarer Heckschnittstelle in Arbeitsstellung,
- Fig. 2: ein Kraftfahrzeug gemäß Fig. 1 mit abgesenkter Heckschnittstelle,
- Fig. 3: ein Kraftfahrzeug gemäß Fig. 1 mit angehobener Heckschnittstelle,
- Fig. 4: die schematische Seitenansicht des hinteren Bereichs eines Kraftfahrzeugs mit teleskopierbarer Heckschnittstelle bei abgesenkter Position des Teleskoparms, dessen Träger durch einen inneren Schwenkzylinder verschwenkbar ist,
- Fig. 5: eine der Fig. 4 entsprechende Seitenansicht, in der der Teleskoparm seine höchste Position einnimmt,
- Fig. 6: die schematische Seitenansicht des hinteren Bereichs eines Kraftfahrzeugs mit teleskopierbarer Heckschnittstelle bei abgesenkter Position des Teleskoparms, dessen Träger durch einen äußeren Schwenkzylinder verschwenkbar ist,
- Fig. 7: eine der Fig. 6 entsprechende Seitenansicht, in der der Teleskoparm seine höchste Position einnimmt,
- Fig. 8: die schematische Seitenansicht des hinteren Bereichs eines Kraftfahrzeugs mit teleskopierbarer Heckschnittstelle und Arretiervorrichtung für den Dreipunktanbau,
- Fig. 9: die schematische Seitenansicht des hinteren Bereichs eines Kraftfahrzeugs mit teleskopierbarer Heckschnittstelle und am Fahrzeugrumpf montierter Anhängevorrichtung,
- Fig. 10: die Anhängevorrichtung der Fig. 9 von hinten gesehen,
- Fig. 11: die schematische Seitenansicht des hinteren Bereichs eines Kraftfahrzeugs mit teleskopierbarer Heckschnittstelle und am Dreipunktanbauträger montierter Anhängevorrichtung und
- Fig. 12: die Anhängevorrichtung der Fig. 11 von hinten gesehen.

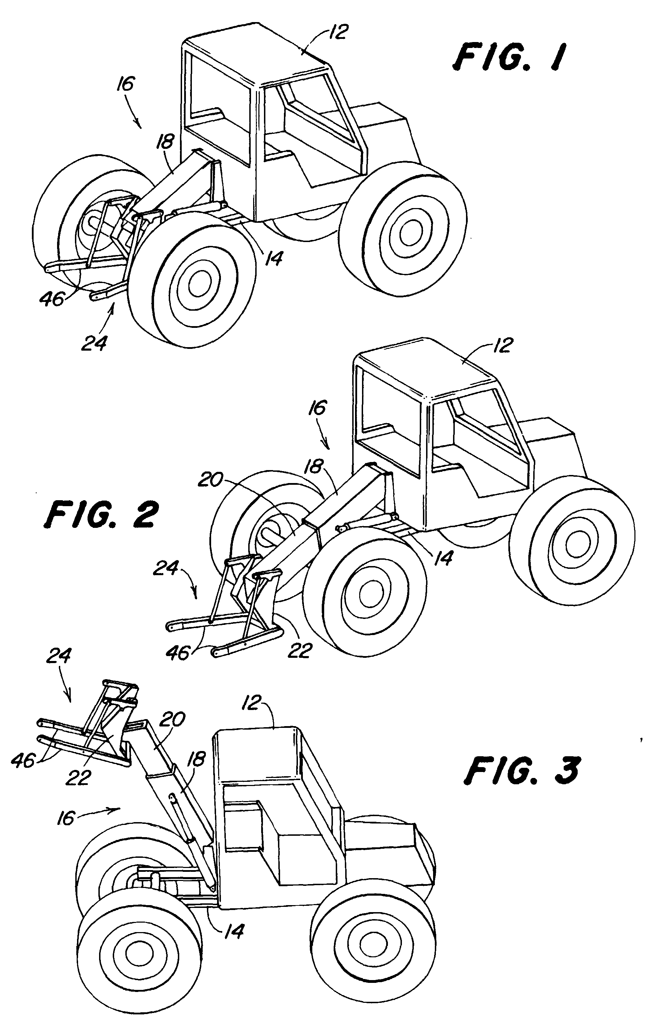

Bei dem in den Figuren 1 bis 3 dargestellten Kraftfahrzeug handelt es sich beispielsweise um einen Mittelsitzschlepper, der nach Art eines heutigen Fast- oder MBtrac ausgebildet ist.

Hinter der Fahrzeugkabine 12 und mittig bezüglich der Quererstreckung des Fahrzeugs ist am Fahrzeugchassis 14 ein Teleskoparm 16 angelenkt, der einen Schwenkteil 18 und einen ausfahrbaren Einschub 20 aufweist. An dem freien Ende des Ausschubs 20 ist ein Träger 22 angelenkt, auf dem ein Dreipunkt-Geräteanbau 24 und weitere in den Figuren 1 bis 3 nicht näher dargestellte Anbauvorrichtungen montiert sind, deren Anbauschnittstellen vorzugsweise den genormten Bestimmungen entsprechen. Weitere Anbauvorrichtungen können auch unmittelbar am Fahrzeugchassis montiert sein.

Die Anbauschnittstelle läßt sich in zwei Betriebsmodi, dem Arbetis- oder Zugmodus und dem Hubmodus, betreiben:

Für den Arbeitsmodus zeigt Fig. 1 den Teleskoparm 16 in eingezogener und verriegelter Stellung. Diese Stellung ist die Transportstellung sowie die Arbeitsstellung für alle Arbeiten mit Dreipunktanbau. Der Träger 22 ist mit dem Fahrzeugchassis 14 starr verbunden und verriegelt. Alle Lasten werden von dem Träger 22 aus direkt über die Verriegelung in das Fahrzeugchassis 14 eingeleitet, so daß der Teleskoparm 16 entlastet ist. In dieser Stellung lassen sich eine in den Figuren 1 bis 3 nicht gezeigte Zapfwelle des Arbeitsfahrzeugs an eine Eingangswelle des Arbeitsgeräts anschließen sowie elektrische und/oder hydraulische Verbindungen zur Kraft- und Signalübertragung zwischen Arbeitsfahrzeug und Arbeitsgerät herstellen. Der Arbeitsmodus wird nach dem Ankoppeln des Gerätes durch Betätigung der Verriegelung aktiviert. Der Arbeitsmodus entspricht dem eines herkömmlichen Dreipunktanbaus.

Der Hubmodus geht aus den Figuren 2 und 3 hervor, in dem der unverriegelte Träger über Hubzylinder geschwenkt und über Ausschubzylinder ausgefahren werden kann. Fig. 2 zeigt den Teleskoparm 16 in ausgefahrener und abgesenkter, unverriegelter Stellung. Diese Stellung ist geeignet, um Geräte aufzunehmen. Beispielsweise kann in dieser Stellung die Zugöse eines Geräts oder Anhängers vom Boden aufgenommen werden. Damit lassen sich die Funktionen Anhängekupplung und Pick-Up Hitch nachbilden. Je nach Ausbildung des Teleskoparms können auch die Funktionen starres Zugpendel (durch teilweises Ausschieben) und höhenverstellbare Anhängekupplung (durch Anheben/Absenken) nachgebildet werden.

Fig. 3 zeigt den Teleskoparm in angehobener und weit ausgefahrener Stellung. Es handelt sich um den Hubmodus zum Durchführen von Hub- und Laderarbeiten oder für das Aufnehmen und Absetzen von hoch abgelegten Arbeitsgräten. Mit diesem Modus lassen sich z. B. Anbaugeräte auf Anhängern aufladen und abladen.

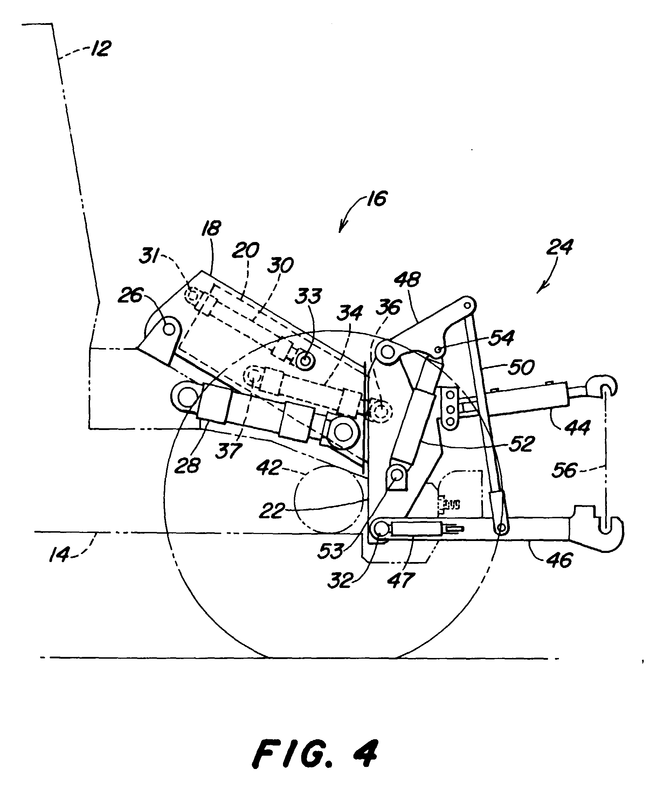

Einzelheiten der teleskopierbaren Heckschnittstelle gehen aus den Figuren 4 bis 12 hervor. Der in diesen Figuren dargestellte Teleskoparm 16 besteht im wesentlichen aus zwei konzentrisch ineinanderschiebbaren Schüssen mit einem Rechteckprofil. Ein als Schwenkteil 18 ausgebildeter Schuß ist durch eine chassisfeste Anlenkstelle 26 derart am Fahrzeug angelenkt, daß er sich um eine horizontale Achse in vertikaler Richtung verschwenken läßt. Das Verschwenken erfolgt durch zwei beidseits des Schwenkteils 18 angeordnete Hubzylinder 28, die jeweils einenends am Fahrzeugchassis 14 und andernends an der Mantelfläche des Schwenkteils 18 angreifen. Es versteht sich, daß für die Ausbildung des Teleskoparms anstelle der beiden Schüsse auch drei, vorzugsweise teleskopartig konzentrisch ineinanderschiebbare Schüsse verwendet werden können.

Innerhalb des Schwenkteils 18 ist ein als Einschub 20 ausgebildeter Schuß angeordnet, der sich durch einen Ausschubzylinder 30 innerhalb des Schwenkteils 18 in axialer Richtung ein- und ausfahren läßt. Zu diesem Zweck ist ein Ende 31 des Ausschubzylinders 30 an dem Schwenkteil 18 und sein anderes Ende 33 an dem Einschub 20 befestigt. Der Ausschubzylinder 30 läßt sich raumsparend innerhalb des Einschubs 20 anordnen.

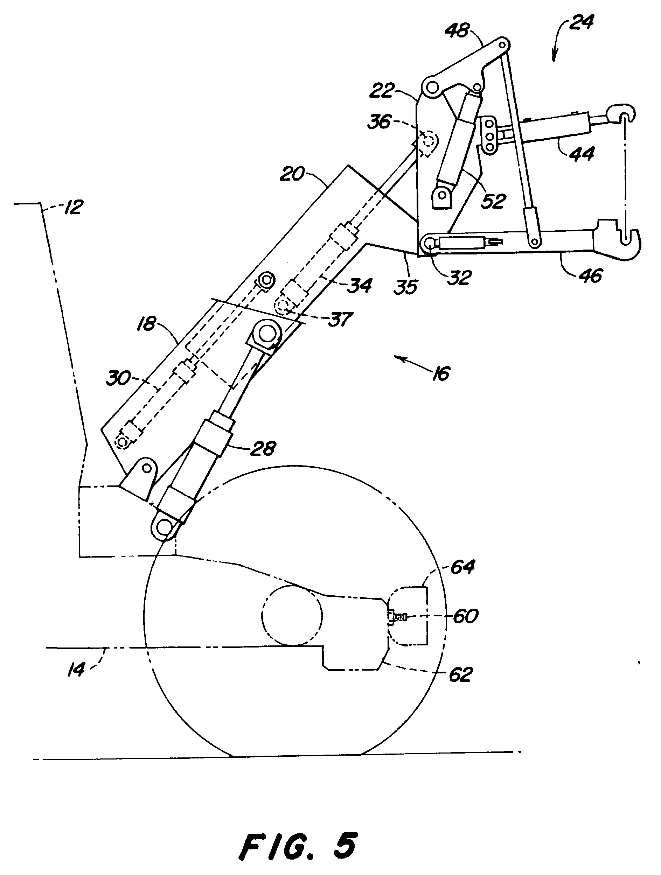

Das aus dem Schwenkteil 18 herausragende freie Ende des Einschubs 20 trägt ein in Fig. 5 erkennbares nach unten abgewinkeltes Bauteil 35, welches eine Anlenkstelle 32 aufweist. Über diese Anlenkstelle 32 ist an dem Einschub 20 ein Träger 22 verschwenkbar befestigt. Zum Verschwenken des Trägers 22 um die horizontal ausgerichtete Anlenkstelle 32 dient ein Schwenkzylinder 34.

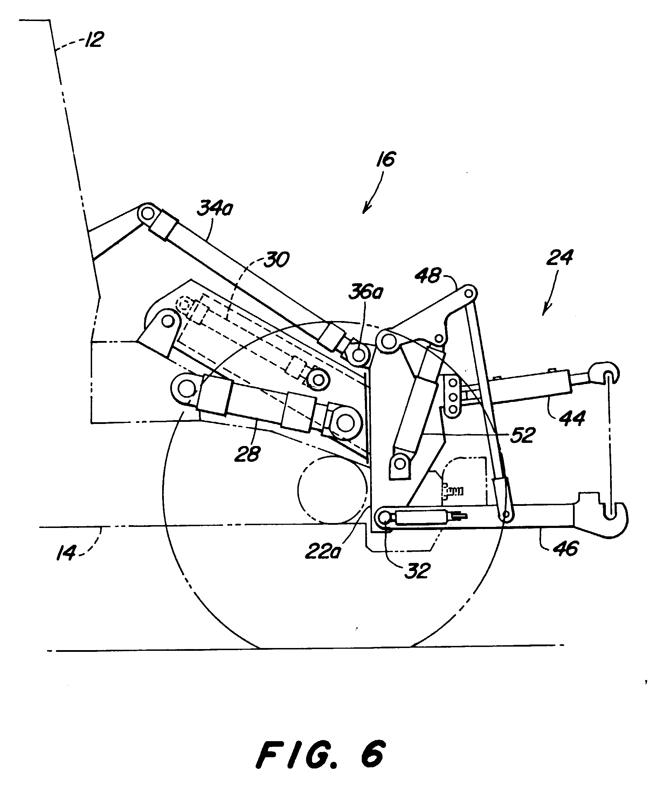

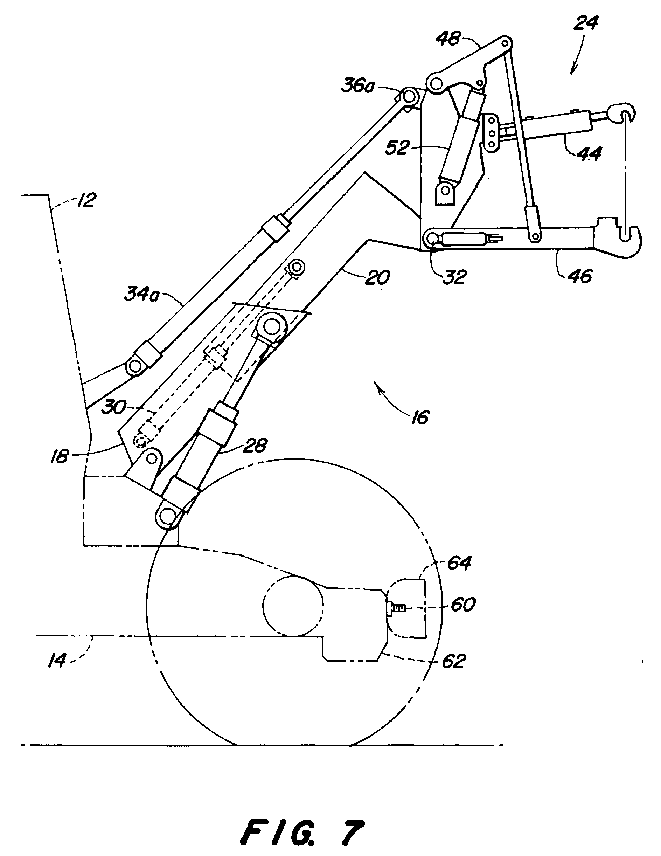

Gemäß den Figuren 4 und 5 verläuft der Schwenkzylinder 34 im wesentlichen im Inneren des Einschubs 20 und ist mit seinem einen Ende 37 an dem Einschub 20 und mit seinem anderen Ende an einer Anlenkstelle 36 des Trägers 22 gelenkig befestigt. Im Unterschied hierzu ist in der in den Figuren 6 und 7 dargestellten Ausgestaltung der Schwenkzylinder 34a außerhalb des Einschubs 20 und oberhalb des Teleskoparms 16 angeordnet und greift einenends an dem Fahrzeugaufbau 12 oder 14 und anderenends an einer Anlenkstelle 36a des Trägers 22a an.

Durch Betätigung des Schwenkzylinders 34, 34a läßt sich der Träger 22, 22a um die horizontal verlaufende Anlenkstelle 32 in und gegen den Uhrzeigersinn aus seiner in den Figuren 4 und 6 dargestellten verriegelten Arbeitsstellung verschwenken.

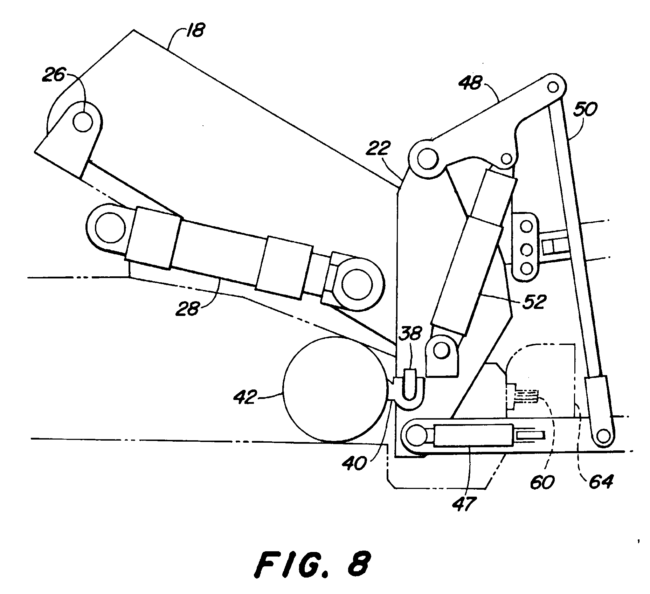

Der Träger 22 läßt sich gegenüber dem Fahrzeugchassis 14 verriegeln, was anhand der Fig. 8 erläutert wird. Die dargestellte Verriegelung eignet sich für alle in den Figuren dargestellten Ausführungsvarianten. Dem Zweck der Verriegelung können beispielsweise zwei nach oben offene Fanghaken 40 dienen, die seitlich versetzt zur Fahrzeuglängsachse je an einem der beiden Achstrichter 42 starr befestigt sind. Bei gefederter Achse empfiehlt es sich jedoch, die Fanghaken 40 an dem Fahrzeugchassis 14 zu befestigen. An dem Träger 22 sind zwei sich quer zur Fahrzeuglängsrichtung erstreckende Vorsprünge 38 angebracht. An die Vorsprünge sind nach oben offene, schlitzartige Ausnehmungen der Fanghaken 40 angepaßt. Die Vorsprünge 38 können von den Ausnehmungen aufgenommen werden. Sie lassen sich innerhalb der Ausnehmungen der Fanghaken 40 verriegeln. Die Art der Verriegelung wurde nicht näher dargestellt. Es eignen sich beispielsweise Verriegelungsmechanismen in der Art, wie sie bei Schnellkupplern von Unterlenkern üblich sind. Die Verriegelung zwischen Träger 22 und Fahrzeugchassis 14 kann alternativ auch durch Verwendung eines Schlosses oder durch die Ausbildung korrespondierender Bohrungen und Absteckbolzen erfolgen.

Durch die Verriegelung zwischen Träger 22 und Fahrzeugchassis 14 kann sichergestellt werden, daß bei Transportfahrten oder bei Arbeiten mit einem Arbeitsgerät der Träger 22, und mit ihm die Anbauschnittstelle, gegenüber dem Fahrzeugchassis fixiert ist und sich nicht relativ zu diesem bewegt. Dies ist besonders bei Zapfwellenarbeiten vorteilhaft.

Bei Verriegelung werden die von dem Träger 22 übertragenen Kräfte unmittelbar, das heißt ohne Zwischenschaltung des Teleskoparms 16, in die Hinterachse oder in das Fahrzeugchassis 14 eingeleitet. Damit werden insbesondere bei Zug- und Transportarbeiten die Zugspannungen unmittelbar an das Fahrzeugchassis übertragen, so daß der Teleskoparm bei diesen Betriebsarten entlastet wird und daher auf relativ geringe Belastungen ausgelegt werden kann.

Der Träger 22 trägt eine Dreipunkt -Aufhängung mit einem Oberlenker 44 und zwei seitlichen Unterlenkern 46, die jeweils an dem Träger 22 in üblicher Weise verschwenkbar angelenkt sind. Die Unterlenker 46 lassen sich durch zugehörige, an dem Träger 22 angelenkte Hubarme 48 und Hubstreben 50 anheben und absenken. Die Betätigung der Hubarme 48 erfolgt auf übliche Weise durch Kraftheberzylinder 52, deren jeweils eines Ende 53 an dem Träger 22 und deren jeweils anderes Ende an einer Anlenkstelle 54 des zugehörigen Hubarms 48 gelenkig angreift. Die Querbewegung der Unterlenker 46 läßt sich durch übliche Stabilisierungslenker 47 begrenzen. Die freien Enden der Unterlenker 46 können durch einen lediglich angedeuteten Gerätemast 56 mit dem freien Ende des Oberlenkers 44 verbunden sein.

In den Figuren 4 bis 8 ist desweiteren eine Zapfwelle 60 angedeutet, die aus einem Zapfwellengetriebegehäuse 62 herausragt. Das Zapfwellengetriebegehäuse 62 ist an einem nicht näher dargestellten Getriebegehäuse des Fahrzeugs angeflanscht. Die Zapfwelle 60 ist durch ein übliches Zapfwellenschutzschild 64 abgedeckt.

Die Hubzylinder 28, der Ausschubzylinder 30 und der Schwenkzylinder 34 können als doppelwirkende Hydraulikzylinder ausgebildet sein. Die Hydraulikversorgung erfolgt über das bordeigene Fahrzeughydrauliksystem. Die Bedienung der Hydraulikzylinder erfolgt durch in der Fahrzeugkabine angeordnete Stellorgane, über die sich Hydraulikventile betätigen lassen, um die Hydraulikölströme entsprechend einzustellen. Die Kraftheberzylinder 52 werden auf übliche Weise betätigt bzw. gesteuert. Eine an sich bekannte, nicht näher dargestellte Niveauregeleinrichtung dient der Ansteuerung des Schwenkzylinders 34 und der Ausrichtung des Trägers 22 in eine gewünschte Arbeitsstellung.

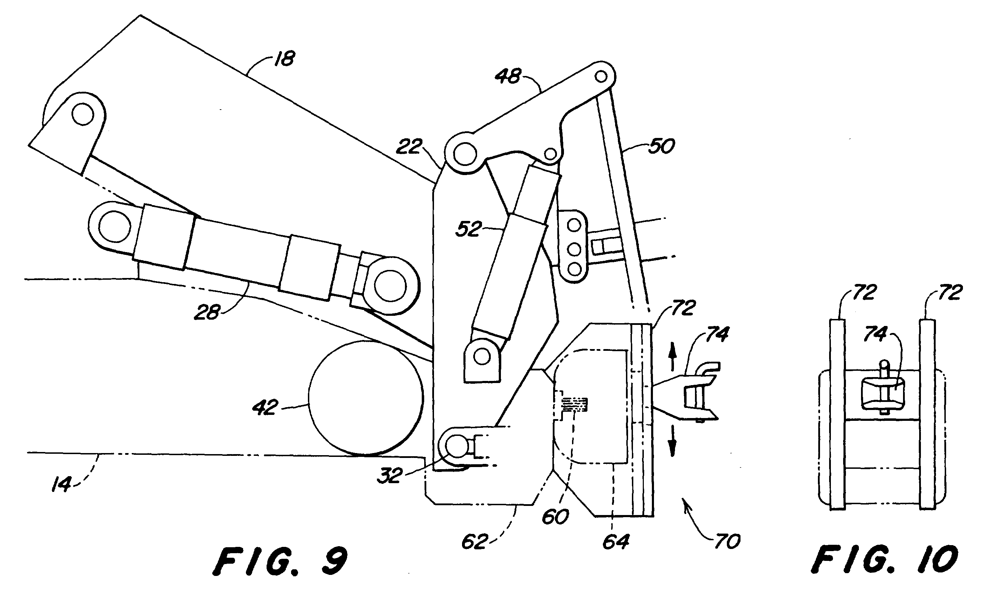

Aus den Figuren 9 und 10 geht eine Anhängevorrichtung 70 hervor, die an dem Zapfwellengetriebegehäuse 62 befestigt ist. Es handelt sich um eine konventionelle höhenverstellbare Anhängevorrichtung 70 mit zwei seitlichen Führungsschienen 72 die eine in der Höhe verschiebbare und in verschiedenen Höhenlagen arretierbare Anhängekupplung 74 führen. Die Befestigung der Anhängevorrichtung 70 am stationären Zapfwellengetriebegehäuse 62 hat den Vorteil, daß die Konstruktion der teleskopierbaren Heckschnittstelle nicht durch das Anhängen von Geräten belastet wird.

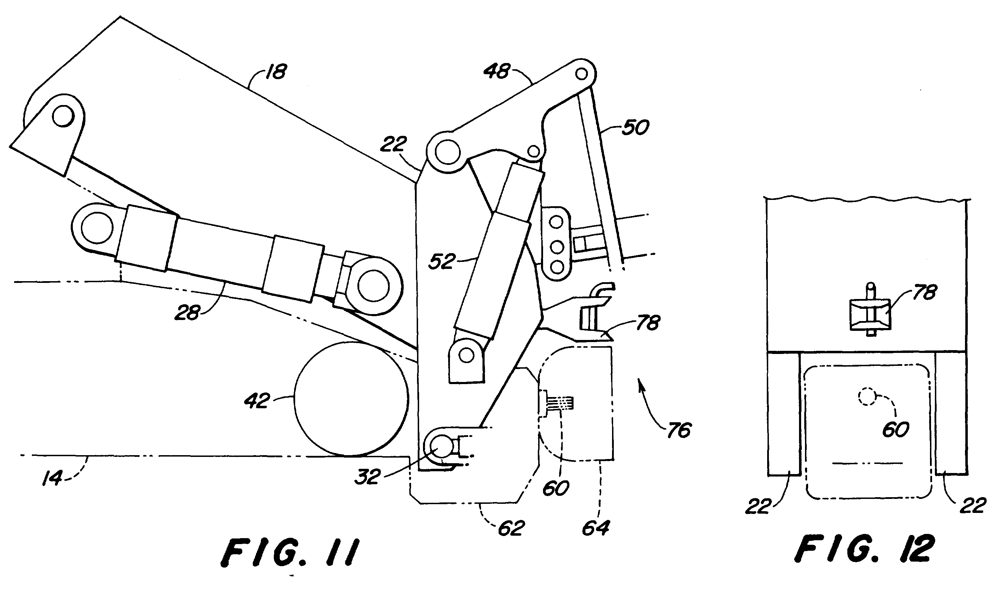

Aus den Figuren 11 und 12 geht eine alternative Ausgestaltung für eine Anhängevorrichtung 76 hervor. Hier ist die Anhängekupplung 78 am Dreipunktanbauträger 22 befestigt. Diese Ausbildung ist konstruktiv einfacher als die in den Figuren 9 und 10 dargestellte, da die Führungsschienen 72 entfallen können. Die Höhenverstellung erfolgt über den Teleskoparm.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kraftfahrzeug für industrielle und/oder landwirtschaftliche Arbeiten, insbesondere Ackerschlepper, mit einer einen Dreipunkt-Geräteanbau (24) enthaltenden Anbauschnittstelle an der Fahrzeugrückseite oder an der Fahrzeugvorderseite und mit einem an dem Fahrzeugchassis (14) angelenkten teleskopierbaren und um eine horizontale Achse in vertikaler Richtung schwenkbaren Teleskoparm (16), an dessen freiem ausfahrbaren Ende ein Träger (22) angeordnet ist, der die Anbauschnittstelle mit dem Dreipunkt-Geräteanbau (24) trägt, dadurch gekennzeichnet, und daß eine Verrieglungsvorrichtung (38, 40) vorgesehen ist, durch die der Träger (22) gegenüber dem Fahrzeugchassis (14) fixierbar ist, wenn sich der Teleskoparm (16) in einer Arbeitsstellung befindet.

2. Kraftfahrzeug nach Anspruch 1, dadurch gekennzeichnet, daß die Anbauschnittstelle neben dem Dreipunkt-Geräteanbau (24) weitere Anbauvorrichtungen und/oder Anhängevorrichtungen enthält.

3. Kraftfahrzeug nach Anspruch 1 oder 2, dadurch gekennzeichnet, daß der Teleskoparm (16) mittig, hinter der Bedienerplattform (12) und vor der Hinterachse des Kraftfahrzeugs angelenkt ist.

4. Kraftfahrzeug nach einem der Ansprüche 1 bis 3, dadurch gekennzeichnet, daß der Teleskoparm (16) ein am Fahrzeugchassis (14) schwenkbar angelenktes Schwenkteil (18) und mindestens einen ausfahrbaren Einschub (20) enthält.

5. Kraftfahrzeug nach einem der Ansprüche 1 bis 4, dadurch gekennzeichnet, daß der Teleskoparm (16) zwei konzentrisch ineinanderschiebbare Schüsse (18, 20) aufweist.

6. Kraftfahrzeug nach einem der Ansprüche 1 bis 5, dadurch gekennzeichnet, daß der Teleskoparm wenigstens drei konzentrisch ineinanderschiebbare Schüsse aufweist.

7. Kraftfahrzeug nach einem der Ansprüche 1 bis 6, dadurch gekennzeichnet, daß zwischen dem Schwenkteil (18) und einem ausfahrbaren Einschub (20) bzw. zwischen den Schüssen jeweils wenigstens ein als Druckmittelkolben-Zylindereinheit ausgebildeter Ausschubzylinder (30) zum Aus- und Einfahren des Einschubs (20) bzw. der Schüsse vorgesehen ist.

8. Kraftfahrzeug nach einem der Ansprüche 1 bis 7, dadurch gekennzeichnet, daß zwischen dem Fahrzeugchassis (14) und dem Teleskoparm (16) wenigstens ein als Druckmittelkolben-Zylindereinheit ausgebildeter Hubzylinder (28) zum vertikalen Schwenken des Teleskoparms (16) vorgesehen ist.

9. Kraftfahrzeug nach einem der Ansprüche 1 bis 8, dadurch gekennzeichnet, daß der Träger (22) mit dem freien Ende des Teleskoparms (16) gelenkig verbunden ist und daß zwischen dem Teleskoparm (16) bzw. dem Fahrzeugaufbau (14) einerseits und dem Träger (22, 22a) andererseits wenigstens ein als Druckmittelkolben-Zylindereinheiten ausgebildeter Schwenkzylinder (34, 34a) zum Schwenken des Trägers (22) um eine horizontale Achse in vertikaler Richtung vorgesehen ist.

10. Kraftfahrzeug nach Anspruch 9, dadurch gekennzeichnet, daß eine Niveausteuereinrichtung mit dem wenigstens einen Schwenkzylinder (34) zusammenwirkt, um den Träger (22) unabhängig von der Schwenklage des Teleskoparms (16) in einer gewünschten Ausrichtung relativ zum Boden zu halten.

11. Kraftfahrzeug nach einem der Ansprüche 1 bis 10, dadurch gekennzeichnet, daß ein an den Dreipunkt-Geräteanbau (24) befestigbarer Adapter vorgesehen ist, der der Aufnahme von speziellen Geräten dient.
